# EUROPEAN PATENT SPECIFICATION

(11) **EP 2 583 422 B1**
(45) Date of publication and mention of the grant of the patent: **02.07.2014**
(21) Application number: 11729766.3
(22) Date of filing: 16.06.2011
(51) Int. Cl.: H04L 12/58, H04L 29/08

(54) **MULTI-MEDIA MESSAGING WITH DYNAMIC TRANSCODING**
MULTIMEDIA-NACHRICHTENÜBERTRAGUNG MIT DYNAMISCHER TRANSCODIERUNG
MESSAGERIE MULTIMÉDIA À TRANSCODAGE DYNAMIQUE

(30) Priority: 17.06.2010 US 344244 P
(43) Date of publication of application: 24.04.2013
(73) Proprietor: Markport Limited, Dublin 2 (IE)
(72) Inventor: WIJBRANS, Klaas, NL-5121 MV Rijen (NL); KROL, Aram, NL-5685 JM Best (NL); JESTERHOUDT, Ron, NL-1339 HS Almere (NL)
(74) Representative: Weldon, Michael James
(86) International application number: PCT/IE2011/000031
(87) International publication number: WO 2011/158224

(56) References cited:
- WO-A1-03/103271
- WO-A1-2006/000887
- US-A1- 2004 083 291

## Description

### Introduction

The invention relates to processing of multi-media messages in a communication network such as a mobile network.

Document WO03/103271 A1 provides a method for receiving a Session Initiation Protocol, SIP, message having information indicative of terminal capabilities at a server from a registering terminal. The information is stored and compared with characteristics of an incoming message from another entity. The incoming message is adapted to match the capabilities of the registering terminal, and the adapted message is sent to the terminal.

US2002/0101880 describes a network service in which an abstraction engine with a translator operates even with dynamically shifting network channel conditions.

With the increasing usage of MMS capable handsets and the increasing traffic levels, both the usability and the efficiency of the service are becoming more important. Usability is for a large part the ability to show a sent message from a specific handset in an appropriate manner on the recipient handset. In practice, this may require transcoding between handsets to make sure that the content generated on one handset can be presented on another handset.

Transcoding involves a heavy usage of CPU. As a result, for a typical MMS service, multiple transcoding servers are needed per MMS server if all messages need to be transcoded.

Network overhead and maintenance is also affected by the effort needed to provision the transcoding servers and the MMSC appropriately with the many new handset types coming to the market every month and new firmware revisions of existing handsets that also continuously increase the capabilities of a handset. Transcoding is a highly specialized task requiring a significant amount of handset IOT to determine the appropriate configuration rules for performing the transcoding operations themselves. The transcoders themselves are generally provided by specialized companies other than the MMSC provider who provide the configuration of the transcoder as a service.

This however either requires that the operator either:
(a) passes all messages through the transcoder, giving rise to need for a large extent of communication with external servers, or
(b) provisions the MMSC with the appropriate information to prevent transcoding from occurring for specific content on specific handset combinations, which gives rise to need for a considerable amount of provisioning and maintenance.

An object of the invention is to achieve greater processing efficiency for transcoding for compatibility with different user device capabilities.

### Summary of the Invention

According to the invention, there is provided a messaging system as set out in claim 1.

In one embodiment, the system processor is adapted to observe content format in a message sent by a device of the same type as the destination device, and to deduce that the destination device can receive content in the same format.

In one embodiment, the system processor is adapted to observe modifications performed by an external transcoder on an original message and the resulting transcoder output.

In a further embodiment, the system processor comprises a probing component adapted to automatically determine content type of a received message to determine the nature of the content.

In one embodiment, the probing component is adapted to parse a received message.

Preferably, the probing component is adapted to parse a MIME message, to parse an SMIL part of a MIME message and to read content types that are part of the standardized content classes.

In one embodiment, the probing component is adapted to generate an output indicating properties of a specific content type, such as height, or width, or colour, or depth.

In one embodiment, a property is JPEG profile, and/or height and width for an image, and/or audio bit rate, and/or sample frequency, and/or sample size for audio, and/or width. Height, frame rate, and colour depth for video.

In one embodiment, the system processor comprises a content class database and a message content matching component adapted to take the output of the probing component and match it against the content class database by determining the lowest content class that matches the particular content. In one embodiment, the matching generates a match on a content class that the specific content belongs to, and the match is stored with the message and with its metadata.

In a further embodiment, the system further comprises a device compatibility database and the matching component is adapted to perform a lookup against the device compatibility database to verify whether a type of device is already tagged with a content class, and if not, this content class is added in to the content class database to the content classes supported by this type of device.

In one embodiment, the system processor is adapted to save part of the retrieval request submitted by the recipient handset, including an identification of the recipient device type.

In one embodiment, the system processor comprises a transcoder decision component adapted to perform a lookup in the device compatibility database to retrieve the content classes supported by a type of device, to compare content class of a message with the retrieved content classes, and if the content class of the message is equal to or a subset of one of the retrieved content classes, to allow delivery of the message without transcoding.

In one embodiment, the transcoder decision component is adapted to, alternatively, send the message to a transcoder with an indication of the recipient device type.

In a further embodiment, the transcoder is hosted on an external server.

In one embodiment, the system processor is adapted to dynamically update the content class database.

In one embodiment, content classes are not pre-defined but created on an ad-hoc basis whenever a message is received.

In one embodiment, content-classes are maintained per device type by storing the content-properties observed in submissions of the specific device type.

In another aspect, the invention provides a method of operation of a messaging system as set out in claim 13.

In one embodiment, the system processor observes messages sent by devices of the same type to determine which formats the destination device can receive.

In one embodiment, the system processor observes modifications performed by an external transcoder on an original message and the resulting transcoder output.

In another aspect, the invention provides a computer program product as set out in claim 16.

### Detailed Description of the Invention

The invention will be more clearly understood from the following description of some embodiments thereof, given by way of example only with reference to the accompanying drawings in which:-
Fig. 1 is a diagram showing an MMSC of the invention in a mobile network;
Fig. 2 is a diagram showing the MMSC in more detail, with the major internal architecture components illustrated;
Fig. 3 is a pair of flow diagrams illustrating operation of the MMSC for transcoding;
Fig. 4 is a combined block and flow diagram illustrating operation of an MMSC in a different method; and
Fig. 5 shows operation of the MMSC in which there is accelerated automatic learning.

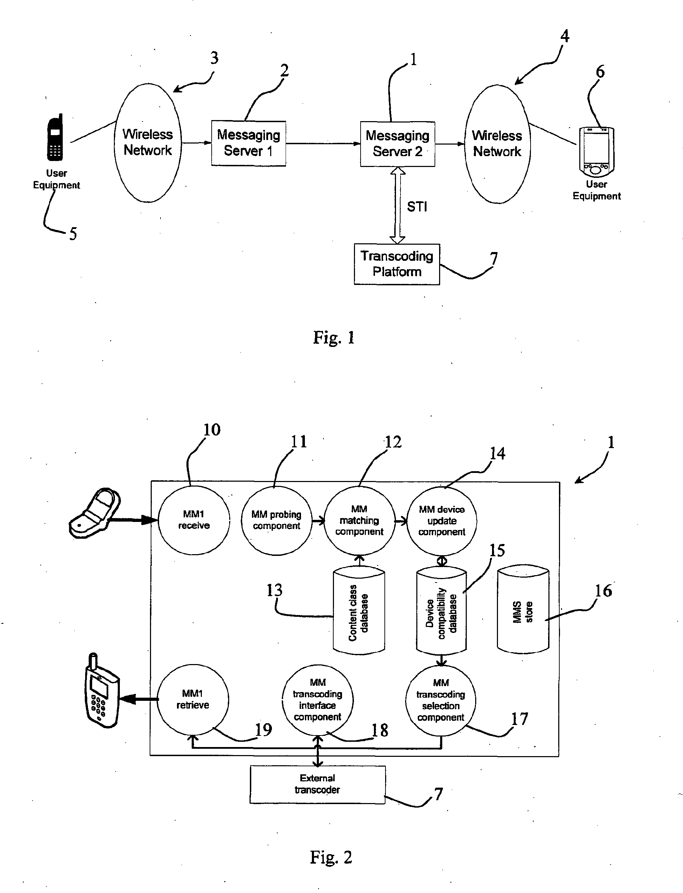

Referring to Fig. 1 context of an MMSC 1 of the invention is shown. The MMSC 1 communicates with another MMSC 2. The MMSC 1 is in a mobile network 4 within which as receiving user device 6 is located, and the MMSC 2 is in a mobile network 3 within which an originating mobile device 5 is located. The MMSC 1 of the invention is linked with an external transcoding server 7.

As shown in Fig. 2, the MMSC 1 comprises:
a receive interface 10,
an MM probing component 11,
an MM matching component 12,
a content class database 13,
an MM device update component 14,
a device compatibility database 15,
an MMS store 16,
an MM transcoding selection component 17,
an MM transcoding interface component 18,
an MM retrieve interface 19.

The submission interface 10 accepts MO messages from the handsets, the store 16 contains the stored message, and the retrieval interface 19 is used for retrieval of the stored message. The retrieval interface 19 is connected to the transcoder 7 using for example the interface as specified in the OMA STI standard. The common prior art practice is that when retrieving a message, the original submitted MM message and the retrieving handset UAProf header or User-Agent string are provided to the transcoder 7, after which the transcoder uses its internal database to determine the optimal output format for this specific MM and modifies it to comply to that.

In standardization, the formats which a handset can handle are grouped into so-called *content-classes.* A content class is defined in the OMA MMS standard as a profile consisting of the various types of contents and constraints on this content that all handsets in a given content class must support. MM messages sent with the same content class or from a lower to a higher content class never need transcoding. The MM content class database contains the definitions of the various standardized OMA MMS content class specifications, such as the MMS 1.0 content class, the MMS 1.1 content class, the MMS 1.2 content classes and the MMS 1.3 content classes and thus serves as a reference for these. It is a separate database to allow the operator to configure additional content classes when standardization progresses. A content class is specified as a combination of content-types and sizes, as in the table below from the OMA-MMS-1.3-CONF standard for 3GPP compliant handsets.

| MM Content Class | Size (kB) | Text | Still Image | Bitmap | Video | Speech Audio | Synth. Audio | PIM | DRM | Presentation |
|---|---|---|---|---|---|---|---|---|---|---|
| Text | ≤30 | US-ASCII, UTF-8, UTF-16 | N/A | N/A | N/A | N/A | N/A | N/A | N/A | MMS SMIL |
| Image Basic | ≤30 | US-ASCII, UTF-8, UTF-16 | Baseline JPEG | GIF87a, GIF89a, WBMP | N/A | AMR-NB | N/A | vCard 2.1, vCalendar 1.0 | N/A | MMS SMIL |
| Image Rich | ≤100 | US-ASCII, UTF-8, UTF-16 | Baseline JPEG | GIF87a, GIF89a, WBMP | N/A | AMR-NB | SP-MIDI | vcard 2.1, vCalendar 1.0 | Fwd-Lock | MMS SMIL |
| Video Basic | ≤100 | US-ASCII, UTF-8, UTF-16 | Baseline JPEG | GIF87a, GIF89a, WBMP | H.263 & AMR **(.3GP)** | AMR-NB | SP-MIDI | vCard 2.1, vCalendar 1.0 | Fwd-Lock | MMS SMIL with video support |
| Video Rich | ≤300 | US-ASCII, UTF-8, UTF-16 | Baseline JPEG | GIF87a, GIF89a, WBMP | H.263 & AMR (.3GP) | AMR-NB | SP-MIDI | VCard 2.1, vCalendar 1.0 | Fwd-Lock | MMS SMIL with video support |

The MM probing component 11 includes a parser module with probing logic for the content types found in the MM content classes. The probing component 11 has the capability to parse the MIME message, to parse the SMIL part of the MIME messages and to "peek" into the various content types that are part of the standardized content classes such as image/jpeg, image/gif, audio/ámr and video/3gpp. It then will generate an output telling the various properties of the specific content type, such as the height/width/colordepth and JPEG profile (JFIF, ...) for JPEG, height/width for image/gif, audio bit rate, sample frequency, sample size for audio, width/height/framerate/colordepth for video.

The MM matching component 12 takes the output of the MM probing component 11 and matches it against the content class database by determining the lowest content class that matches this particular content. This results in a 'hit' on the content class that the specific content belongs to. This hit is then stored with the MM message with its metadata.

Subsequently, a lookup is performed against the device compatibility database 15 to verify whether this type of handset is already tagged with this content class. If not, this content class is added to the content classes supported by this type of device.

The MMSC 1 will then proceed normally to deliver the message using the standard MMS protocol. At retrieval time, the recipient handset will contact the MMSC 1 to retrieve the multimedia message. Part of the retrieval request submitted by the recipient handset is the identification of the recipient handset type (through either the User-Agent header or the UAProf header).

The transcoder decision function 17 performs a lookup in the device compatibility database to retrieve the content classes supported by this type of device. It then compares the content class of the message with the retrieved content classes. If the content class of the message is equal to or a subset of one of the retrieved content classes, the multimedia message is delivered to the handset without change. If it is not, it is first sent to the external transcoder with an indication of the recipient device type and the transcoded message is sent to the handset. Importantly, the system avoids transcoding whenever it is not necessary, and this is optimally achieved because the system automatically self-learns by observing messages.

A message is received from a specific device type. If it is a previously unknown content class for that type of device, the device database is updated for that type of device with the new content class.

Then, when doing the standard delivery of MMS, the MMSC uses the same device database to determine whether the content classes are supported and then uses those to determine whether it should transcode or not.

To give a simple example:
- Initially, a Device A type is newly launched, and so the system is not aware of its capabilities, so any message sent to a Device A is sent to the transcoder to adapt it to the most common format.
- If a user sends a message from a Device A, the system probes it and uses that to determine the Device A capabilities. In the device database the Device A entry is created with that capability attached.
- If now a message is sent to a Device A, the system probes it to determine its content class and checks that against the device database. If the probed content class is present for the Device A, it knows that it does not have to transcode.

The invention achieves learning of 'Content-Rich' content classes, by learning the content classes such as from trusted third parties sending content with an explicit non-transcoding indicator. In general, the embodiments can achieve self-learning of the capabilities of devices in three main different ways: observing the sender, and/or observing the transcoder output, and/or observing trusted 3^{rd} parties sending with a non transcoding indicator.

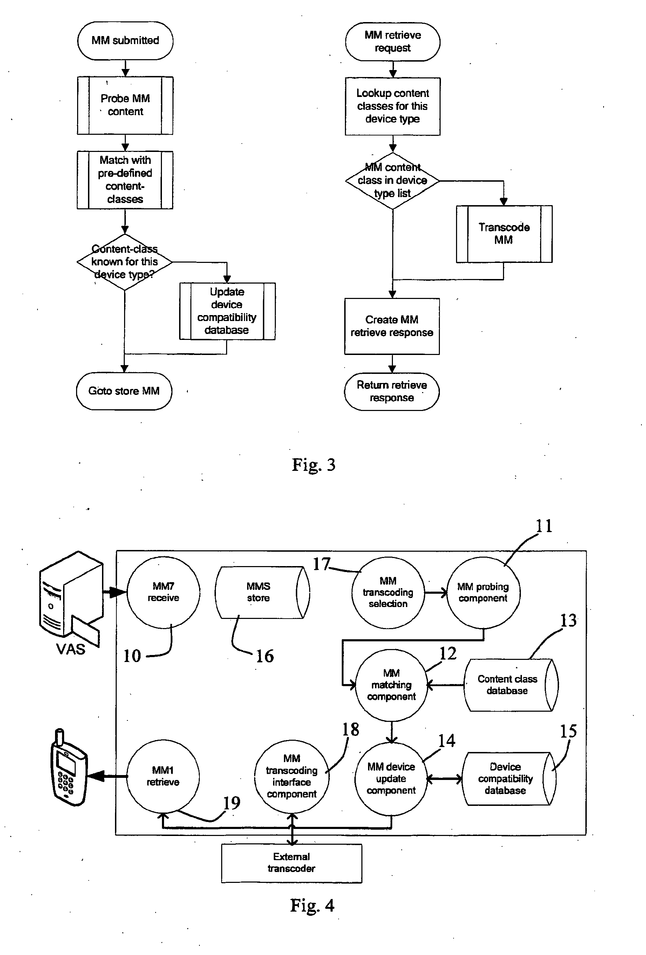

Fig. 3 illustrates the main decision points for the additional functionality, one for the submission leg and one for the retrieval leg:

### Dynamic content classes

As a refinement to the implementation (and most likely necessary to extend the generic capability to domains where content classes are not standardized), there is an option to define dynamic content classes.

In this extension, content classes are not pre-defined but created on an ad-hoc basis whenever the multimedia message is submitted. The device compatibility database and the content class database are no longer separate entities, but instead content-classes are maintained per device type by storing the content properties observed in submissions of the specific handset type.

In this case, the MM matching component 12 is used per device type. If a submission is within an existing content-class for that device type (i.e., it is a subset of the properties of an earlier submission), no action is undertaken. If it does not match an existing content class, (e.g., the first occurrence of a new media type) a new content class is created and attached to that device. If it is an extension of an existing content class (e.g., same type of content but an image with a larger height or width was submitted), the content class is extended with the new information, e.g., the maximum image width and image height parameters for that type of image are set to the newly received values.

As a result, the invention will also work in environments where content classes are not pre-defined or standardized. Instead, the content-classes are learned dynamically by observing the actual submission behaviour of the handsets. This is for example important for the mobile e-mail domain and the new IM/SIP messaging domain where such content classes are not defined (yet).

Both approaches can be combined for an optimal end user experience: if a MM message matches a pre-defined content class, the pre-defined content class is tagged in the device compatibility database. If a device sends a MM message that is outside the pre-defined content classes, a dynamic content class is created for that device capturing the parameters exceeding the pre-defined content classes. In practice, this is valuable because many handsets extend the minimum supported content classes thus allowing richer messaging than based on the minimum content classes alone.

### Extension for VAS messages

For the OMA defined content-class Content-Rich it is not trivial to detect based on handset submissions whether a handset supports this content class, as it is explicitly defined as a content class that only is sent from a content-provider to a handset. Therefore an alternative means of learning that the handset supports the content-class is needed.

This alternative means could be that some VAS (Value Added Service) sent MMS messages with a non-transcoding indicator. VAS-es do that because the VAS has knowledge of the handset capabilities, tailors the multimedia message to the handset characteristics and therefore does NOT want the MMSC to transcode the message as that would result in a degraded user experience.

The self-learning transcoding optimization can benefit from this by executing the following logic in the retrieval chain (shown in Fig. 4):
1. Based on the value of the non-transcoding indicator the MM transcoding selection 17 either delivers the MM to the MM transcoding interface component 18, or the MM probing component.
2. The MM probing component 11 extracts the media properties of the MM by analyzing the MM content.
3. The MM matching component 12 compares the media properties to the known content classes and determines the resulting content class.
4. If this MM content class is not attached to this device type, the MM device update component 14 updates the content classes this device type supports by adding this content class.
5. The MM is delivered unchanged to the handset.

A refinement is to do the device update only for specific Value Added Services for which it is known that they take the actual device properties into account.

### Accelerated learning using the transcoding output

In the above approach, it is not necessary to provision the MMSC with which handsets need to be transcoded as it is self-learning based on the MM content classes submitted by the handset or (optionally) sent to the handset via a trusted VAS. However, until a handset of a specific type sends a specific content class all MMs of that content class sent to that handset type will still go to the transcoder.

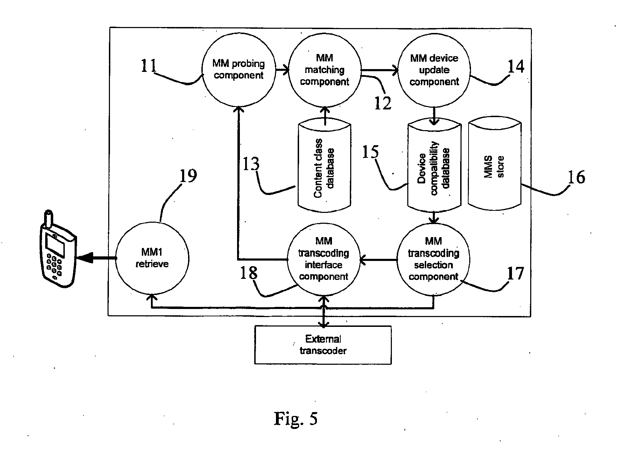

The learning process can be accelerated as shown in Fig. 5 with the following additional optimization in the retrieval path (assuming that the external transcoder is provisioned). As shown, the output of the MM transcoding interface component is fed back into the MM probing component. As a result, the device compatibility database 15 is also updated at each retrieval of a MM message by a specific device type so that it hits the transcoder only the first time if transcoding is not necessary for that content class.

The invention is most likely to be applicable in MMSCs in all networks to optimize the resources content adaptation. It also applies to upcoming SIP messaging (OMA SIMPLE IM, OMA CPM) as the transcoding problem is likely to be present in those as well.

The invention is not limited to the embodiments described but may be varied in construction and detail.

## Claims

1. A messaging system (1) comprising:
an interface (10, 19) for receiving messages with content; and
an interface (18) for requesting message transcoding or a transcoding component for performing transcoding;
a processor (11-17);
wherein the system processor is adapted to dynamically determine if transcoding is required for a message having a destination device and, if so, to select a transcoding mechanism to be used; and
wherein the system processor is adapted to make said determination according to capabilities of the destination device and the nature of the content,
**characterized in that** the system processor is adapted to dynamically learn rules for determining if transcoding is required, said learning being performed by observing messages, and
wherein the system processor (11-17) is adapted to observe messages sent by a trusted system, such as a Value Added Services server, to devices of the same type as the destination device.

2. A messaging system as claimed in claim 1, wherein the system processor is adapted to observe content format in a message sent by a device of the same type as the destination device, and to deduce that the destination device can receive content in the same format.

3. A messaging system as claimed in claims 1 or 2, wherein the system processor (11-17) is adapted to observe modifications performed by an external transcoder on an original message and the resulting transcoder output.

4. A messaging system as claimed in any preceding claim, wherein the system processor comprises a probing component (11, 12) adapted to automatically determine content type of a received message to determine the nature of the content, and wherein the probing component (11, 12) is adapted to parse a received message.

5. A messaging system as claimed in claim 4, wherein the probing component (11, 12) is adapted to parse a MIME message, to parse an SMIL part of a MIME message and to read content types that are part of the standardized content classes, and wherein the probing component (11, 12) is adapted to generate an output indicating properties of a specific content type, such as height, or width, or colour, or depth.

6. A messaging system as claimed in claim 5, wherein a property is JPEG profile, and/or height and width for an image, and/or audio bit rate, and/or sample frequency, and/or sample size for audio, and/or width, height, frame rate, and colour depth for video, and wherein the system processor comprises a content class database (13) and a message content matching component (12) adapted to take the output of the probing component (11) and match it against the content class database by determining the lowest content class that matches the particular content, and wherein the matching generates a match on a content class that the specific content belongs to, and the match is stored with the message and with its metadata, and wherein the system further comprises a device compatibility database (15) and the matching component (12) is adapted to perform a lookup against the device compatibility database to verify whether a type of device is already tagged with a content class, and if not, this content class is added in to the content class database to the content classes supported by this type of device.

7. A messaging system as claimed in any preceding claim, wherein the system processor is adapted to save part of the retrieval request submitted by the recipient handset, including an identification of the recipient device type.

8. A messaging system as claimed in either of claims 6 or 7, wherein the system processor comprises a transcoder decision component (17) adapted to perform a lookup in the device compatibility database to retrieve the content classes supported by a type of device, to compare content class of a message with the retrieved content classes, and if the content class of the message is equal to or a subset of one of the retrieved content classes, to allow delivery of the message without transcoding.

9. A messaging system as claimed in claim 8, wherein the transcoder decision component (17) is adapted to, alternatively, send the message to a transcoder with an indication of the recipient device type.

10. A messaging system as claimed in claim 8, wherein the transcoder is hosted on an external server (7).

11. A messaging system as claimed in any of claims 6 to 10, wherein the system processor is adapted to dynamically update the content class database (13), and wherein content classes are not pre-defined but created on an ad-hoc basis whenever a message is received.

12. A messaging system as claimed in claim 11, wherein content-classes are maintained per device type by storing the content-properties observed in submissions of the specific device type.

13. A method of operation of a messaging system comprising a processor (11-17), a message interface (10, 19), and an external system interface (18), the method comprising the steps of:
the message interface (10, 19) receiving a message with content and having a destination device,
the system processor (11-19) dynamically determining if transcoding is required for said received message and, if so, selecting a transcoding mechanism to be used;
wherein the system processor makes said determination according to capabilities of the destination device and the nature of the content, and **characterized in that** the system processor dynamically learns rules for determining if transcoding is required, said learning being performed by observing messages,
wherein the system processor observes messages sent by a trusted system (VAS), such as a Value Added Services server, to devices of the same type as the destination devices of the message.

14. A method as claimed in claim 13, wherein the system processor (11-19) observes messages sent by devices of the same type to determine which formats the destination device can receive.

15. A messaging system as claimed in claims 13 or 14, wherein the system processor (11-17) observes modifications performed by an external transcoder on an original message and the resulting transcoder output.

16. A computer program product comprising a computer usable medium having a computer readable program code embodied therein, said program code adapted to be executed by a digital processor to perform the steps of:
receiving a message with content and having a destination device,
dynamically determining if transcoding is required for said received message and, if so, selecting a transcoding mechanism to be used;
in which said determination is made according to capabilities of the destination device and the nature of the content; and **characterized in that**
rules for said determining step are dynamically learned by observing messages,
wherein the system processor observes messages sent by a trusted system (VAS), such as a Value Added Services server, to devices of the same type as the destination devices of the message.

## Patentansprüche

1. Nachrichtenübermittlungssystem (1), das Folgendes umfasst:
eine Schnittstelle (10, 19) zum Empfangen von Nachrichten mit Inhalt; und
eine Schnittstelle (18) zum Anfordern von Nachrichtentranscodierung oder einer Transcodierungskomponente zum Ausführen von Transcodierung;
einen Prozessor (11-17);
wobei der Systemprozessor so ausgelegt ist, dass er dynamisch ermittelt, ob Transcodierung für eine Nachricht mit einem Zielgerät erforderlich ist, und wenn ja, einen zu verwendenden Transcodierungsmechanismus auswählt; und
wobei der Systemprozessor so ausgelegt ist, dass er die genannte Ermittlung gemäß Fähigkeiten des Zielgeräts und der Natur des Inhalts durchführt,
**dadurch gekennzeichnet, dass** der Systemprozessor so ausgelegt ist, dass er dynamisch Regeln zum Ermitteln lernt, ob eine Transcodierung erforderlich ist, wobei das genannte Lernen durch Beobachten von Nachrichten erfolgt, und
wobei der Systemprozessor (11-17) so ausgelegt ist, dass er Nachrichten beobachtet, die von einem Trusted System wie z.B. einem Mehrwertdienste-Server zu Geräten desselben Typs wie das Zielgerät gesendet werden.

2. Nachrichtenübermittlungssystem nach Anspruch 1, wobei der Systemprozessor so ausgelegt ist, dass er Inhaltsformat in einer Nachricht beobachtet, die von einem Gerät desselben Typs wie das Zielgerät gesendet wurde, und davon ableitet, dass das Zielgerät Inhalt im selben Format empfangen kann.

3. Nachrichtenübermittlungssystem nach Anspruch 1 oder 2, wobei der Systemprozessor (11-17) so ausgelegt ist, dass er von einem externen Transcoder an einer ursprünglichen Nachricht durchgeführte Modifikationen und den resultierenden Transcoder-Ausgang beobachtet.

4. Nachrichtenübermittlungssystem nach einem vorherigen Anspruch, wobei der Systemprozessor eine Prüfkomponente (11, 12) umfasst, die so ausgelegt ist, dass sie automatisch den Inhaltstyp einer empfangenen Nachricht ermittelt, um die Natur des Inhalts zu ermitteln, und wobei die Prüfkomponente (11, 12) so ausgelegt ist, dass sie eine empfangene Nachricht parst.

5. Nachrichtenübermittlungssystem nach Anspruch 4, wobei die Prüflcomponente (11, 12) zum Parsen einer MIME-Nachricht, zum Parsen eines SMIL-Teils einer MIME-Nachricht und zum Lesen von Inhaltstypen ausgelegt ist, die Teil der standardisierten Inhaltsklassen sind, und wobei die Prüfkomponente (11, 12) so ausgelegt ist, dass sie einen Ausgang erzeugt, der Eigenschaften eines bestimmten Inhaltstyps wie z.B. Höhe oder Breite oder Farbe oder Tiefe anzeigt.

6. Nachrichtenübermittlungssystem nach Anspruch 5, wobei eine Eigenschaft JPEG-Profil und/oder Höhe und Breite eines Bildes und/oder Audiobitrate und/oder Abtastfrequenz und/oder Abtastgröße für Audio und/oder Breite, Höhe, Frame-Rate und Farbtiefe für Video ist, und wobei der Systemprozessor eine Inhaltsklassendatenbank (13) und eine Nachrichteninhaltabgleichkomponente (12) umfasst, die so ausgelegt ist, dass sie den Ausgang der Prüfkomponente (11) nimmt und mit der Inhaltsklassendatenbank vergleicht, durch Ermitteln der niedrigsten Inhaltsklasse, die mit dem jeweiligen Inhalt übereinstimmt, und wobei der Abgleich eine Übereinstimmung auf einer Inhaltsklasse erzeugt, zu der der spezifische Inhalt gehört, und die Übereinstimmung mit der Nachricht und mit ihren Metadaten gespeichert wird, und wobei das System ferner eine Gerätekompatibilitätsdatenbank (15) umfasst und die Abgleichkomponente (12) zum Ausführen eines Nachschlagens anhand der Gerätekompatibilitätsdatenbank ausgelegt ist, um zu verifizieren, ob ein Gerätetyp bereits mit einer Inhaltsklasse markiert ist, und wenn nicht, dann wird diese Inhaltsklasse in der Inhaltsklassendatenbank zu den von diesem Gerätetyp unterstützten Inhaltsklassen hinzugefügt.

7. Nachrichtenübermittlungssystem nach einem vorherigen Anspruch, wobei der Systemprozessor so ausgelegt ist, dass er einen Teil der von dem Empfängerhandgerät vorgelegten Abrufanforderung einschließlich einer Identifikation des Empfängergerätetyps speichert.

8. Nachrichtenübermittlungssystem nach Anspruch 6 oder 7, wobei der Systemprozessor eine Transcoder-Entscheidungskomponente (17) umfasst, die zum Ausführen eines Nachschlagens in der Gerätekompatibilitätsdatenbank ausgelegt ist, um die von einem Gerätetyp unterstützten Inhaltsklassen abzurufen, um Inhaltsklasse einer Nachricht mit den abgerufenen Inhaltsklassen zu vergleichen, und wenn die Inhaltsklasse der Nachricht gleich einer Teilmenge oder eine Teilmenge von einer der abgerufenen Inhaltsklassen ist, um die Zuführung der Nachricht ohne Transcodierung zuzulassen.

9. Nachrichtenübermittlungssystem nach Anspruch 8, wobei die Transcoder-Entscheidungskomponente (17) alternativ zum Senden der Nachricht zu einem Transcoder mit einer Anzeige des Empfängergerätetyps ausgelegt ist.

10. Nachrichtenübermittlungssystem nach Anspruch 8, wobei der Transcoder auf einem externen Server (7) gehostet wird.

11. Nachrichtenübermittlungssystem nach einem der Ansprüche 6 bis 10, wobei der Systemprozessor so ausgelegt ist, dass er dynamisch die Inhaltsklassendatenbank (13) aktualisiert, und wobei Inhaltsklassen nicht vordefiniert werden, sondern auf Ad-hoc-Basis immer dann erzeugt werden, wenn eine Nachricht empfangen wird.

12. Nachrichtenübermittlungssystem nach Anspruch 11, wobei Inhaltsklassen pro Gerätetyp durch Speichern der in Vorlagen des bestimmten Gerätetyps beobachteten Inhaltseigenschaften geführt werden.

13. Verfahren zum Betreiben eines Nachrichtenübermittlungssystems, das einen Prozessor (11-17), eine Nachrichtenschnittstelle (10, 19) und eine externe Systemschnittstelle (18) umfasst, wobei das Verfahren die folgenden Schritte beinhaltet:
Empfangen, durch die Nachrichtenübermittlungsschnittstelle (10, 19), einer Nachricht mit Inhalt und mit einem Zielgerät,
dynamisches Ermitteln, durch den Systemprozessor (11-19), ob eine Transcodierung für die genannte empfangene Nachricht erforderlich ist, und wenn ja, Auswählen eines zu verwendenden Transcodierungsmechanismus;
wobei der Systemprozessor die genannte Ermittlung gemäß Fähigkeiten des Zielgeräts und der Natur des Inhalts durchführt, und **dadurch gekennzeichnet, dass** der Systemprozessor dynamisch Regeln zum Ermitteln lernt, ob Transcodierung erforderlich ist, wobei das genannte Lernen durch Beobachten von Nachrichten erfolgt,
wobei der Systemprozessor Nachrichten beobachtet, die von einem Trusted System (VAS) wie z.B. einem Mehrwertdienste-Server zu Geräten desselben Typs wie die Zielgeräte der Nachricht gesendet werden.

14. Verfahren nach Anspruch 13, wobei der Systemprozessor (11-19) von Geräten desselben Typs gesendete Nachrichten beobachtet, um zu ermitteln, welche Formate das Zielgerät empfangen kann.

15. Nachrichtenübermittlungssystem nach Anspruch 13 oder 14, wobei der Systemprozessor (11-17) von einem externen Transcoder an einer ursprünglichen Nachricht durchgeführte Modifikationen und den resultierenden Transcoder-Ausgang beobachtet.

16. Computerprogrammprodukt, das ein von einem Computer benutzbares Medium mit einem darin ausgestalteten computerlesbaren Programmcode umfasst, wobei der genannte Programmcode so ausgelegt ist, dass er bei Ausführung durch einen digitalen Prozessor die folgenden Schritte ausführt:
Empfangen einer Nachricht mit Inhalt und mit einem Zielgerät,
dynamisches Ermitteln, ob Transcodierung für die genannte empfangene Nachricht erforderlich ist, und wenn ja, Auswählen eines zu verwendenden Transcodierungsmechanismus;
wobei die genannte Ermittlung gemäß Fähigkeiten des Zielgeräts und der Natur des Inhalts erfolgt; und
**dadurch gekennzeichnet, dass** Regeln für den genannten Ermittlungsschritt dynamisch durch Beobachten von Nachrichten gelernt werden, wobei der Systemprozessor Nachrichten beobachtet, die von einem Trusted System (VAS) wie z.B. einem Mehrwertdienste-Server zu Geräten desselben Typs wie die Zielgeräte der Nachricht gesendet werden.

## Revendications

1. Un système de messagerie (1) comprenant :
une interface (10, 19) destinée à la réception de messages avec un contenu, et une interface (18) destinée à la demande d'un transcodage de message ou d'un composant de transcodage destiné à l'exécution du transcodage,
un processeur (11-17),
où le processeur système est adapté de façon à déterminer dynamiquement si un transcodage est nécessaire pour un message possédant un dispositif de destination et, si c'est le cas, de façon à sélectionner un mécanisme de transcodage à utiliser, et
où le processeur système est adapté de façon à effectuer ladite détermination en fonction de capacités du dispositif de destination et de la nature du contenu,
**caractérisé en ce que** le processeur système est adapté de façon à apprendre dynamiquement des règles afin de déterminer si un transcodage est nécessaire, ledit apprentissage étant réalisé par l'observation de messages, et
où le processeur système (11-17) est adapté de façon à observer des messages envoyés par un système de confiance, tel qu'un serveur de services à valeur ajoutée, à des dispositifs du même type que le dispositif de destination.

2. Un système de messagerie selon la Revendication 1, où le processeur système est adapté de façon à observer un format de contenu dans un message envoyé par un dispositif du même type que le dispositif de destination et de façon à déduire que le dispositif de destination peut recevoir un contenu dans le même format.

3. Un système de messagerie selon la Revendication 1 ou 2, où le processeur système (11-17) est adapté de façon à observer des modifications exécutées par un transcodeur externe sur un message d'origine et la sortie de transcodeur résultante.

4. Un système de messagerie selon l'une quelconque des Revendications précédentes, où le processeur système comprend un composant de vérification (11, 12) adapté de façon à déterminer automatiquement un type de contenu d'un message reçu de façon à déterminer la nature du contenu, et où le composant de vérification (11, 12) est adapté de façon à analyser un message reçu.

5. Un système de messagerie selon la Revendication 4, où le composant de vérification (11, 12) est adapté de façon à analyser un message MIME, à analyser une partie SMIL d'un message MIME et à lire des types de contenu qui font partie de classes de contenu standardisées, et où le composant de vérification (11, 12) est adapté de façon à générer une sortie indiquant des propriétés d'un type de contenu spécifique, telles que hauteur ou largeur ou couleur ou profondeur.

6. Un système de messagerie selon la Revendication 5, où une propriété est un profil JPEG et/ou une hauteur et une largeur pour une image et/ou un débit binaire audio et/ou une fréquence d'échantillonnage et/ou une taille d'échantillon pour l'audio, et/ou une largeur, une hauteur, une fréquence de trames et une profondeur de couleur pour la vidéo, et où le processeur système comprend une base de données de classes de contenus (13) et un composant de mise en correspondance de contenus de messages (12) adapté de façon à prendre la sortie du composant de vérification (11) et l'apparier avec la base de données de classes de contenus par la détermination de la classe de contenus la plus basse qui correspond au contenu considéré, et où la mise en correspondance génère un appariement avec une classe de contenus à laquelle le contenu considéré appartient, et l'appariement est conservé en mémoire avec le message et avec ses métadonnées, et où le système comprend en outre une base de données de compatibilité de dispositifs (15) et le composant de mise en correspondance (12) est adapté de façon à exécuter une consultation de la base de données de compatibilité de dispositifs de façon à vérifier si un type de dispositif est déjà balisé avec une classe de contenus, et si ce n'est pas le cas, cette classe de contenus est ajoutée à la base de données de classes de contenus aux classes de contenus prises en charge par ce type de dispositif.

7. Un système de messagerie selon l'une quelconque des Revendications précédentes, où le processeur système est adapté de façon à sauvegarder une partie de la demande de récupération soumise par le combiné récepteur, comprenant une identification du type de dispositif récepteur.

8. Un système de messagerie selon l'une quelconque des Revendications 6 ou 7, où le processeur système comprend un composant de décision de transcodeur (17) adapté de façon à exécuter une consultation de la base de données de compatibilité de dispositifs de façon à récupérer les classes de contenus prises en charge par un type de dispositif, à comparer une classe de contenus d'un message aux classes de contenus récupérées, et si la classe de contenus du message est égale à ou est un sous-ensemble de l'une des classes de contenus récupérées, de façon à permettre la remise du message sans transcodage.

9. Un système de messagerie selon la Revendication 8, où le composant de décision de transcodeur (17) est adapté de façon à, dans une variante, envoyer le message à un transcodeur avec une indication du type de dispositif récepteur.

10. Un système de messagerie selon la Revendication 8, où le transcodeur est hébergé sur un serveur externe (7).

11. Un système de messagerie selon l'une quelconque des Revendications 6 à 10, où le processeur système est adapté de façon à actualiser dynamiquement la base de données de classes de contenus (13) et où les classes de contenus ne sont pas prédéfinies mais créées de manière ponctuelle chaque fois qu'un message est reçu.

12. Un système de messagerie selon la Revendication 11, où les classes de contenus sont entretenues par type de dispositif par la conservation en mémoire des propriétés de contenu observées dans des soumissions du type de dispositif spécifique.

13. Un procédé d'exploitation d'un système de messagerie comprenant un processeur (11-17), une interface de message (10, 19) et une interface système externe (18), le procédé comprenant les opérations suivantes :
la réception par l'interface de message (10, 19) d'un message avec un contenu et possédant un dispositif de destination,
la détermination dynamique par le processeur système (11-19) si un transcodage est nécessaire pour ledit message reçu et, si c'est le cas, la sélection d'un mécanisme de transcodage à utiliser,
où le processeur système effectue ladite détermination en fonction de capacités du dispositif de destination et de la nature du contenu, et **caractérisé en ce que** le processeur système apprend dynamiquement des règles afin de déterminer si un transcodage est nécessaire, ledit apprentissage étant exécuté par l'observation de messages,
où le processeur système observe des messages envoyés par un système de confiance (VAS), tel qu'un serveur de services à valeur ajoutée, à des dispositifs du même type que les dispositifs de destination du message.

14. Un procédé selon la Revendication 13, où le processeur système (11-19) observe des messages envoyés par des dispositifs du même type de façon à déterminer quels formats le dispositif de destination peut recevoir.

15. Un système de messagerie selon la Revendication 13 ou 14, où le processeur système (11-17) observe des modifications exécutées par un transcodeur externe sur un message d'origine et la sortie de transcodeur résultante.

16. Un produit de programme informatique comprenant un support utilisable par ordinateur possédant un code de programme lisible par ordinateur incorporé à celui-ci, ledit code de programme étant adapté de façon à être exécuté par un processeur numérique de façon à exécuter les opérations suivantes :
la réception d'un message avec un contenu et possédant un dispositif de destination,
la détermination dynamique si un transcodage est nécessaire pour ledit message reçu et, si c'est le cas, la sélection d'un mécanisme de transcodage à utiliser,
ladite détermination étant effectuée en fonction de capacités du dispositif de destination et de la nature du contenu, et **caractérisé en ce que**
des règles pour ladite opération de détermination sont apprises dynamiquement par l'observation de messages, où le processeur système observe des messages envoyés par un système de confiance (VAS), tel qu'un serveur de services à valeur ajoutée, à des dispositifs du même type que les dispositifs de destination du message.
